# EUROPEAN PATENT SPECIFICATION

(11) **EP 1 926 311 B1**
(45) Date of publication and mention of the grant of the patent: **28.02.2018**
(21) Application number: 07115240.9
(22) Date of filing: 29.08.2007
(51) Int. Cl.: H04N 21/422

(54) **Image display apparatus**
Bildanzeigevorrichtung
Appareil d'affichage d'images

(30) Priority: 21.11.2006 KR 20060115294
(43) Date of publication of application: 28.05.2008
(73) Proprietor: Samsung Electronics Co., Ltd., Suwon-si, Gyeonggi-do 16677 (KR)
(72) Inventor: Jin, Kyoung-mi, Jukjeon 1-dong, Yongin-si, Gyeonggi-do (KR)
(74) Representative: Walaski, Jan Filip

(56) References cited:
- WO-A1-03/088645
- US-A1- 2004 107 444
- US-A1- 2005 068 151

## Description

The present invention relates to an image display apparatus and a method for providing a Xlet therefor.

Interactive TV, the use of which has rapidly increased, is a service that is expected to be a major element of next-generation multimedia, and may include video on demand, a PC communication service, multimedia PC functions, a home shopping function and a home banking function, in addition to general TV services.

In order to provide such services, an interactive TV can receive an additional data broadcast as well as a general broadcast. The additional data broadcast includes a Xlet, which is configured to assign functions to predetermined keys of a remote controller. The term Xlet generally refers to a Java application performed in a digital TV set and is similar, in concept, to a Java applet used in Internet applications.

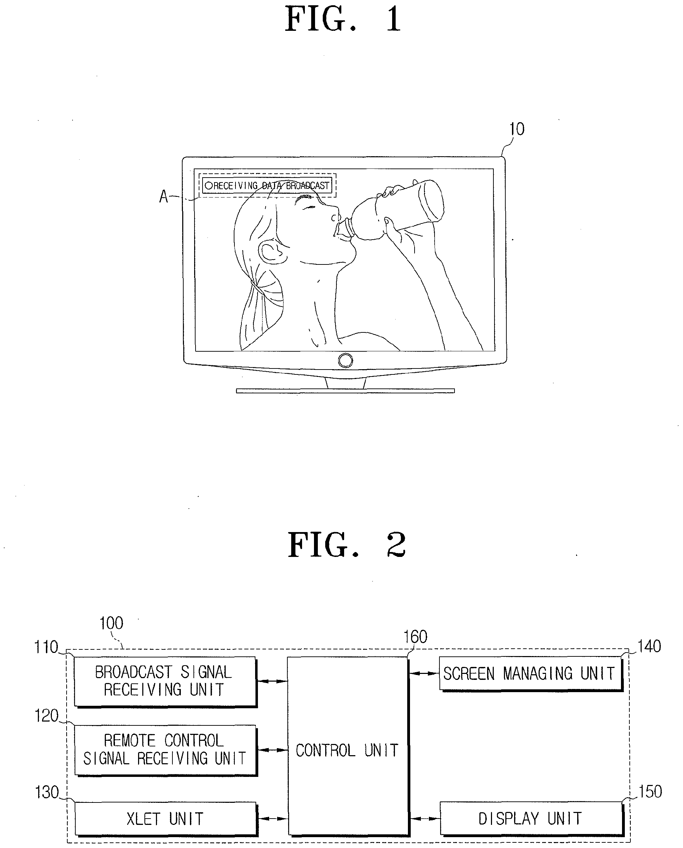

FIG. 1 shows a conventional apparatus 10 in a general data broadcast receiving state. If a data broadcast is received together with a general broadcast, a message A of "RECEIVING DATA BROADCAST" is displayed on a screen and a user can watch the data broadcast by selecting a predetermined key for viewing a data broadcast in a remote controller.

As shown in FIG. 1, in the state in which a TV 10 is presenting a general broadcast, function keys of a remote controller which are assigned functions relating to an Xlet, referred to hereinafter as Xlet function keys, do not perform any operation even when manipulated by a user. In other words, the function keys of the remote controller, which have not been assigned Xlet-related functions, such as a color key, channel up/down keys, volume up/down keys and a power source key, perform their corresponding operations when manipulated by a user, while the Xlet function keys of the remote controller, which excludes the color key, the channel up/down keys, the volume up/down keys and the power source key and includes number keys, a menu key and a channel list key, do not perform any operation even when manipulated by the user.

Although the message A, "RECEIVING DATA BROADCAST", is displayed on the screen of the TV 10, a user might not notice it. In FIG. 1, the message A of "RECEIVING DATA BROADCAST" is shown in a form which can be viewed easily with the naked eye. However, in many other instances, the message A might be difficult to discriminate from an image of a general broadcast.

Moreover, if the TV 10 is receiving a data broadcast, a user might not realize that some function keys of the remote controller cannot be used. In fact, it may be difficult, even for a user having technical knowledge, to recognize that the TV 10 is receiving a data broadcast. Therefore, the user might erroneously believe that there is a malfunction in the operation of the TV 10 or the remote controller.

US 2004/107444 is considered to be the closest prior art and discloses a data broadcasting guidance system receiving a transport stream and extracting a broadcasting signal described as an Xlet. A remote control of the system has a plurality of functions keys. The television display shows an indication of the function associated to a function key. The remote control can also display such an indication by making a button blink. The document does not mention the possibility that some function keys may not be assigned to the Xlet which is currently being executed. It does not address the user inconvenience which may result from pressing an unassigned function key and the lack of feedback being given to the user.

US 2005/068151 discloses a television system extracting from a transport stream signal display information described as a JAVA application. A remote control of the system has a display indicating the functions associated to a plurality of function keys.

WO 03/088645 discloses a television system extracting from a transport stream Xlets. The user of the system can select the desired Xlets to be extracted, and then executed. Example embodiments of the present invention may overcome the above disadvantages and other disadvantages not described above. However, it is not required that such example embodiments overcome the disadvantages described above and an embodiment of the present invention may be devised that does not overcome any of the problems described above.

Accordingly, it is an object of the present invention to provide an image display apparatus and a method for providing a Xlet thereof, which facilitates informing a user of the status of function keys of a remote controller, to allow a user to recognize that the Xlet is being executed.

According to an aspect of the invention, an image display apparatus arranged to receive commands from a remote controller having a plurality of function keys comprises an Xlet unit which performs an Xlet included in a data broadcast signal; and a display unit which displays a state of a plurality of function keys preoccupied by the performed Xlet.

The image display apparatus may also comprise a control unit which controls the Xlet unit to perform an operation corresponding to an input signal input received from the remote controller, if the input signal corresponds to the selection of one of the plurality of function keys, wherein said one function key is assigned a function relating to the Xlet.

The display unit may display at least one of said function keys, the at least one displayed function key excluding any of the plurality of function keys that have been assigned functions relating to the executed Xlet.

The control unit may control the display unit to display the Xlet executed by the Xlet unit if an input signal corresponds to the selection of one of the function keys that has been assigned a function relating to the Xlet, which has been set to execute the Xlet.

The control unit may control the display unit to display a message informing a user that the Xlet is being executed if an input signal corresponding to the selection of one of the function keys preoccupied by the Xlet, which has not been set to perform the Xlet, is received.

The control unit may control the display unit to display the Xlet performed by the Xlet unit, if a visual change of the Xlet is generated by the Xlet unit.

The control unit may control the display unit to display a message informing a user that the Xlet is being executed, if a visual indication of the execution of the Xlet is not generated by the Xlet unit.

The image display apparatus may further comprise a screen managing unit, which changes a screen in response to a request from the Xlet unit, and the control unit may determine that a visual change of the Xlet is generated if the screen managing unit calls for a function for use when the screen is changed.

This aspect of the present invention also provides a method for providing an Xlet in an image display apparatus arranged to receive commands from a remote controller having a plurality of function keys, the method comprising executing a Xlet included in a data broadcast signal and displaying a status of one or more function keys having assigned functions relating to the executed Xlet.

The method may further comprise controlling the Xlet to perform an operation corresponding to an input signal received from the remote controller if the input signal corresponds to the selection of one of the function keys having an assigned function relating to the Xlet.

The status of the one or more function keys having assigned functions relating to the executed Xlet may be displayed by displaying a plurality of function keys not reserved for Xlet-related functions.

When performing the operation corresponding to the input signal, the Xlet being executed may be displayed if the input signal corresponds to the selection of one of the function keys relating to the Xlet which has been set to run the Xlet.

When performing the operation corresponding to the input signal, a message informing a user that the Xlet is being executed may be displayed if the input signal corresponds to the selection of one of the function keys relating to the Xlet which has not been set to run the Xlet.

When performing the operation corresponding to the input signal, the Xlet being executed may be displayed if a visual change of the Xlet is generated.

When performing the operation corresponding to the input signal, a message informing a user that the Xlet is being executed may be displayed if a visual change of the Xlet is not generated.

The method may further comprise calling a function for use when a screen is changed if, when performing the operation corresponding to the input signal, it is determined that a visual change of the Xlet is generated.

The above aspects and features of the present invention will be more apparent by describing embodiments of the present invention by way of example, with reference to the accompanying drawings, in which:
FIG. 1 is a view of prior art apparatus in a general data broadcast receiving state;
FIG. 2 is a block diagram of an image display apparatus according to an embodiment of the present invention;
FIG. 3 is a view showing a system comprising the image display apparatus of FIG. 2 in a data broadcast receiving state;
FIG. 4 is a flow chart for explaining a method for providing a Xlet for the image display apparatus of FIG. 2; and
FIG. 5 is a flow chart for explaining a method for providing a Xlet for an image display apparatus according to another embodiment of the present invention.

Referring to FIG. 2, an image display apparatus 100 according to an embodiment of the present invention includes a broadcast signal receiving unit 110, a remote control signal receiving unit 120, a Xlet unit 130, a screen managing unit 140, a display unit 150 and a control unit 160.

The broadcast signal receiving unit 110 receives broadcast signals through an antenna. The broadcast signals received by the broadcast signal receiving unit 110 take the form of a transport stream and include general broadcast signals, including image signals and voice signals, and a data broadcast signal for a data broadcast.

The data broadcast signal provides information separate from the general broadcast signals, such as traffic information, stock information and electronic program guide (EPG) information, and carries and transfers a Xlet. The term Xlet generally refers to a Java application executed in a digital TV set and is a concept similar to Java applets used in the Internet.

The Xlet may be of an automatic start type or of a manual start type. A Xlet of a manual start type requires a separate Xlet selecting process. Such a selecting process is not required for a Xlet of an automatic start type.

A function relating to the Xlet may be assigned to a predetermined key of a remote controller. That is, some of the function keys of the remote controller, referred to hereafter as Xlet function keys, can be reserved for Xlet-related functions, through middleware. When reserved for Xlet-related functions, the Xlet function keys do not perform any standard functions normally allocated to them, even if manipulated by a user. The remote controller may have function keys that are reserved for Xlet related functions only. Similarly, some of the plurality of function keys provided in the remote controller, such as channel up/down keys, volume up/down keys and a power key, may be reserved for functions that are not related to the Xlet.

Since the broadcast signals received at the broadcast receiving unit 110 have been modulated using a transmitter (not shown) to transfer the broadcast signals, a process such as a demodulation may be necessary in the image display apparatus 100. This process is well known in the prior art and, therefore, a detailed description will be omitted.

The remote controller transfers an input signal according to the selection and activation of a function key to the image display apparatus 100. The remote control signal receiving unit 120 receives the input signal for controlling the operation of the image display apparatus 100.

The Xlet unit 130 executes the Xlet included in the data broadcast signal of the broadcast being received at the broadcast receiving unit 110. The Xlet unit 130 is a unit for managing all Xlets received at the image display apparatus and may contain information on all the Xlets.

After executing the Xlet, the Xlet unit 130 informs the control unit 160 which of the plurality of function keys included in the remote controller are assigned Xlet-related functions. Through this, a user can be informed of those function keys that are not reserved for Xlet-related functions and that remain in a normal usable state.

The screen managing unit 140 adjusts the display of data on the screen according to commands from the Xlet unit 130. The screen managing unit 140 can control the size of the display and change graphics by calling a corresponding function, such as "show", "move", and "hide" in home audio/video interoperability (HAVI). The execution of a Xlet by the Xlet unit 130 can be indicated on the display unit 150 under the control of the screen managing unit 140.

The display unit 150 displays the general broadcast signals received by the broadcast signal receiving unit 110 and the Xlet executed by the Xlet unit 130 under the control of the control unit 160 so that a user can view them.

If the Xlet unit 130 executes the Xlet, the display unit 150 can display a message A of "RECEIVING DATA BROADCAST" informing a user that the Xlet is being performed, to one side of the screen, in a similar manner to the conventional apparatus shown in FIG. 1.

Additionally, the display unit 150 can display the reserved state of the Xlet function keys of the remote controller. For example, the display unit 150 may display the plurality of function keys included in the remote controller, excluding the function keys reserved for functions relating to the Xlet being executed by the Xlet unit 130, in a form which can be easily recognized by a user.

In this particular embodiment, the display unit 150 displays the function keys, excluding the function keys preoccupied by the Xlet. In other words, those function keys that are not reserved for Xlet-related functions are displayed. However, the present invention is not limited to such an arrangement. For example, the display unit may be arranged to display those function keys having a Xlet-related function assigned to them. A user can be informed of the mode of implementation through a user's manual or similar.

The control unit 160 controls the overall functions of the image display apparatus 100 and controls signals transmitted between the broadcast signal receiving unit 110, the remote control signal receiving unit 120, the Xlet unit 130, the screen managing unit 140 and the display unit 150.

If an input signal corresponding to a selection of a Xlet function key of the remote controller is received through the remote control signal receiving unit 120, the control unit 160 controls the image display apparatus to perform an operation corresponding to the input signal.

Although predetermined function keys of the plurality of function keys included in the remote controller are reserved for functions relating to the Xlet, some of the reserved function keys might not capable of performing any function.

For example, the remote controller may be arranged so that an input signal for running the Xlet can be generated by selection of a red key provided in the remote controller. Meanwhile, number keys for 0 to 9, a menu key and a channel list key in the remote controller can be set so as to be reserved for functions not relating to the Xlet and so are incapable of performing functions that are related to the Xlet. Although the Xlet is executed and the screen is changed if the red key of the remote controller is activated by a user, because no reaction is generated even by manipulating one of the number keys for 0 to 9, the menu key and the channel list key, a user may mistakenly think that the image display apparatus 100 or the remote controller 300 is malfunctioning if no information regarding the execution of the Xlet is provided. Therefore, in this embodiment, the display apparatus displays a message so that a user can be informed that the Xlet is being executed if the user manipulates one of the number keys for 0 to 9, the menu key and the channel list key. For this, the control unit 160 performs the following functions.

If an input signal corresponding to selection of a Xlet function key which is set to run the Xlet, is received, the control unit 160 controls the display unit 150 to display the Xlet performed by the Xlet unit 130.

On the other hand, if an input signal corresponding to selection of a function key reserved for an Xlet-related function that is not set to run the Xlet is received, the control unit 160 controls the display unit 150 to display a message to inform the user that the Xlet is being executed

Additionally, if a visual change of the Xlet is generated by the Xlet unit 130, the control unit 160 controls the display unit 150 to display the Xlet performed by the Xlet unit 130.

On the other hand, if a visual change of the Xlet is not generated by the Xlet unit 130, the control unit 160 controls the display unit 150 to display a message to inform the user that the Xlet is being executed. If a function for use when the screen is changed, is called for in the screen managing unit 140, the control unit 160 determines that a visual change of the Xlet is generated

As mentioned above, this embodiment of the present invention is an example in which the image display apparatus 100 includes the broadcast signal receiving unit 110, the remote control signal receiving unit 120, the Xlet unit 130, the screen managing unit 140, the display unit 150 and the control unit 160. However, the present invention is not limited thereto. For instance, an image display apparatus according to another embodiment might include only a Xlet unit 130 for executing a Xlet contained in the data broadcast signal and a display unit 150 which displays the reserved state of the plurality of function keys reserved for functions relating to the Xlet executed by the Xlet unit 130.

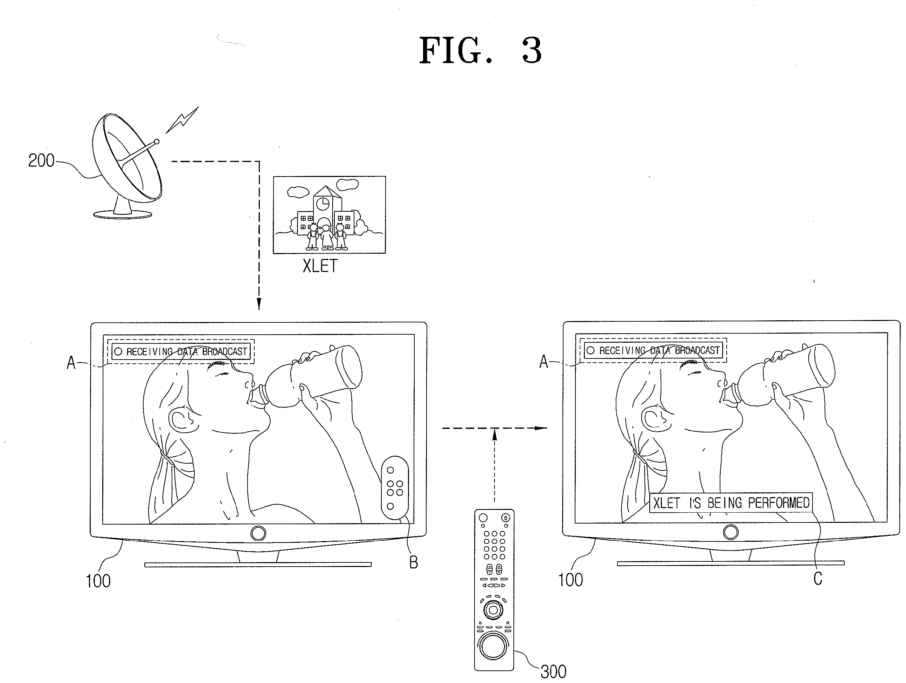

FIG. 3 is a view showing a system comprising the image display apparatus 100 in a data broadcast receiving state.

Broadcast signals, including general broadcast signals and a data broadcast signal and taking the form of a transfer stream, are transmitted from an antenna 200 to the image display apparatus 100. The data broadcast signal includes a Xlet.

A message A, "RECEIVING DATA BROADCAST", is displayed on the display unit 150 of the image display apparatus 100 together with the general broadcast signals. As shown in FIG. 3, since the message A of "RECEIVING DATA BROADCAST" is superimposed onto another image when displayed on the display unit 150, a user might not easily distinguish it from the other image.

Additionally, an indication B, such as a list, of the function keys of the remote controller which are enabled, is displayed on the display unit 150 of the image display apparatus 100. If required, the image display apparatus 100 may be arranged so that a user can change the indication B into a form that can be easily viewed and understood.

Because the list B of enabled function keys might obstruct images of the general broadcast signal, the image display apparatus 100 may be arranged to display the list B for a predetermined period of time only.

Thereafter, if a function key, which is reserved for a function unrelated to the Xlet is activated, for example, one of the number keys for 0 to 9, the menu key or the channel list key, the control unit 160 controls the display unit 150 to display a message informing a user that the Xlet is being executed, e.g. a message C such as "XLET IS BEING PERFORMED". The message C, "XLET IS BEING PERFORMED" is an example of a message informing a user that the Xlet is being performed. A user may be permitted to change the expression and the area of the screen on which it is displayed area into a form that they can easily recognize.

Therefore, a user can be informed that the function key manipulated using the remote controller cannot perform a corresponding function, by displaying the message that the Xlet is being performed on the display unit 150.

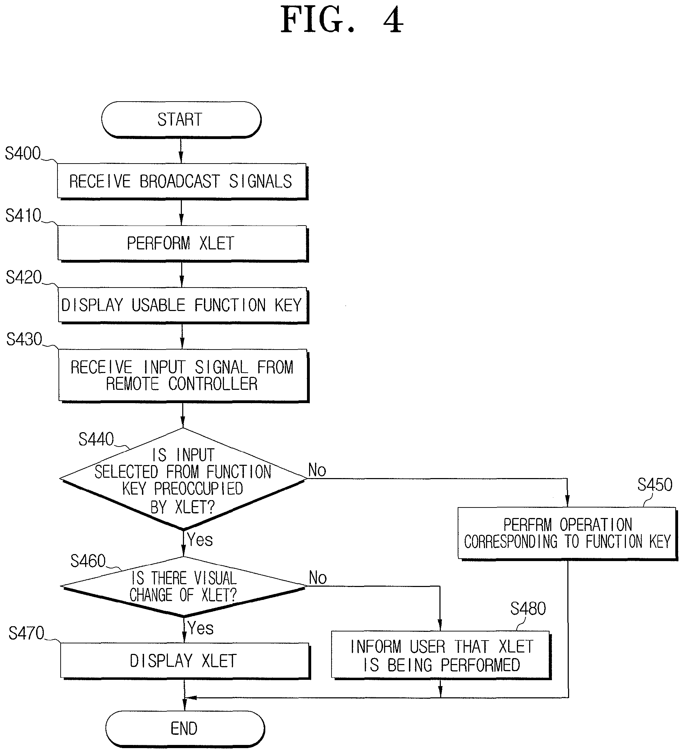

FIG. 4 is a flow chart of an example of method for providing a Xlet in the image display apparatus of FIGS. 2 and 3, according to an example embodiment of the present invention.

The broadcast signal receiving unit 110 receives broadcast signals from the antenna 200 (S400). Here, the broadcast signals include general broadcast signals and a data broadcast signal and the data broadcast signal contains a Xlet.
The Xlet contained in the data broadcast signal of the broadcast signals received through the broadcast signal receiving unit 110 is executed by the Xlet unit 130 (S410). Then, the Xlet reserves predetermined function keys of the remote controller 300 using Java middleware.

The Xlet unit 130 informs the control unit 160 of the function keys of the remote controller 300 which are reserved by the Xlet, and the control unit 160 controls the display unit 150 to display the reserved state of the function keys of the remote controller 300 by the Xlet. In this particular example, the function keys of the remote controller 300 remaining in a normal usable state are displayed (S420), which excludes the Xlet function keys. The displayed function key are those which can be used by a user even when the Xlet is running.

If the remote controller 300 is manipulated by a user while the Xlet is being performed, i.e. in the state in which the data broadcast is being received, the remote control signal receiving unit 120 will receive an input signal from the remote controller 300 (S430). The control unit 160 then determines whether the input signal received through the remote control signal receiving unit 120 corresponds to a function key reserved by the Xlet (S440).

If it is determined, in operation S440, that the input signal received through the remote control signal receiving unit 120 does not correspond to a Xlet function key (S440-N) in operation S440, the control unit 160 controls the image display apparatus to perform an operation corresponding to the input function key, according to the general operation of the remote controller 300 (S450).

If it is determined, in operation S440, that the input signal received through the remote control receiving unit 120 corresponds to a Xlet function key (S440-Y), the control unit 160 determines whether a visual change of the Xlet has been generated. The determination of the visual change of the Xlet can be determined according to whether or not a function for use when the screen is changed, has been called by the screen managing unit (S460).

If, in operation S460, it is determined that a visual change of the Xlet has been generated (S460-Y), the control unit 160 controls the display unit 150 to display the Xlet. When the Xlet is displayed on the display unit 150, the screen is changed by the screen managing unit 140 (S470).

Meanwhile, if, in operation S460, it is determined that a visual change of the Xlet has not been generated (S460-N), the control unit 160 controls the display unit 150 to display a message informing a user that the Xlet is being performed (S480).

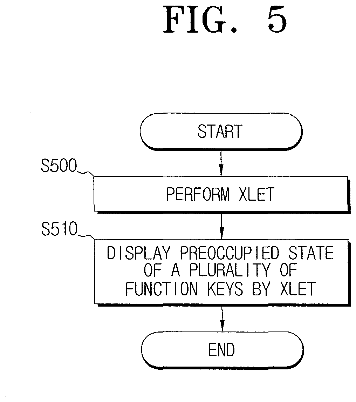

FIG. 5 is a flow chart for explaining a method for providing a Xlet of an image display apparatus according to another example embodiment of the present invention.

If the image display apparatus 100 receives a data broadcast signal containing a Xlet through the broadcast signal receiving unit 110, the Xlet unit 130 executes the received Xlet (S500).

The Xlet reserves some of a plurality of function keys of a remote controller 300 and the display unit 150 displays the reserved state of the plurality of function keys by the Xlet under the control of the control unit 160 (S510).

Through the processes of FIGS. 4 and 5, the display unit 150 displays not only a conventional message A of "RECEIVING DATA BROADCAST" but also a list of function keys of the remote controller 300 which are in an operable state and a message C of "XLET IS BEING PERFORMED". Accordingly, even a user not familiar with the provision of data broadcasts separately from a general broadcast may easily become aware of and use the data broadcast.

As mentioned above, the image display apparatus and the method for providing an Xlet of the image display apparatus according to the exemplary embodiments of the present invention may inform a user of function keys that remain operable in a remoter controller by displaying an indication of those function keys when the data broadcast is being received.

Additionally, if a user manipulates a function key of the remote controller which is reserved by the Xlet and cannot be used in a normal fashion, the user can be informed that the Xlet is being executed, in a form that can be easily recognized by the user, and thus prevented from mistakenly presuming that the image display apparatus and/or the remote controller is malfunctioning.

Although example embodiments of the present invention have been shown and described hereinabove, it would be appreciated by those skilled in the art that the present invention is not limited to those embodiments and various modifications might be made without departing from the scope of the invention, which is defined by the claims.

## Claims

1. An image display apparatus (100) arranged to receive instructions from a remote controller (300), the image display apparatus (100) comprising:
an Xlet unit (130) arranged to execute an Xlet included in a data broadcast signal;
a display unit (150) arranged to indicate a status of a plurality of Xlet function keys of the remote controller (300), to which functions relating to the Xlet are assigned; and
a control unit (160) arranged to control the Xlet unit (130) to perform an operation corresponding to an input signal received from the remote controller (300), if the input signal corresponds to activation of one of the Xlet function keys,
wherein the control unit (160) is further arranged to control the display unit (150) to display a message indicating that the Xlet is being executed if the input signal corresponds to the selection of one of the Xlet function keys, which has not been set to perform the Xlet.

2. The image display apparatus (100) as claimed in claim 1, wherein the display unit (150) is arranged to display a plurality of function keys of the remote controller (300) excluding the plurality of Xlet function keys.

3. The image display apparatus (100) as claimed in claim 1, wherein the control unit (160) is arranged to control the display unit (150) to display the Xlet executed by the Xlet unit (130), if the input signal corresponds to the activation of one of the Xlet function keys, wherein said one Xlet function key has an assigned function of executing the Xlet.

4. The image display apparatus (100) as claimed in claim 1 or 3, wherein the control unit (160) is arranged to control the display unit (150) to display the Xlet being executed by the Xlet unit (130) if a visual change of the Xlet is generated by the Xlet unit (130).

5. The image display apparatus (100) as claimed in claim 1, 3 or 4, wherein the control unit (160) is arranged to control the display unit (150) to display a message informing a user that the Xlet is being executed if a visual change of the Xlet is not generated by the Xlet unit (130).

6. The image display apparatus (100) as claimed in claim 4, further comprising:
a screen managing unit (140) which changes a display on a screen in response to a request from the Xlet unit (130),
wherein the control unit (160) is arranged to determine whether a visual change of the Xlet is generated according to whether the screen managing unit (140) calls a function for use when a display on the screen is changed.

7. A method for providing an Xlet of an image display apparatus (100) arranged to receive instructions from a remote controller (300), the method comprising:
performing an Xlet included in a data broadcast signal;
indicating a status of a plurality of Xlet function keys of the remote controller (300), to which functions relating to the Xlet have been assigned; and
performing an operation corresponding to an input signal received from the remote controller (300), if the input signal corresponds to activation of one of the Xlet function keys,
wherein performing the operation corresponding to the input signal comprises displaying a message indicating that the Xlet is being executed if the input signal corresponds to the selection of one of the Xlet function keys which has not been set to execute the Xlet.

8. The method as claimed in claim 7, wherein the status of the plurality of Xlet function keys is indicated by displaying only a plurality of function keys of the remote controller (300) that are not assigned functions relating to the Xlet.

9. The method as claimed in claim 7, wherein performing the operation corresponding to the input signal comprises displaying the executed Xlet if the input signal corresponds to the selection of one of the Xlet function keys, wherein said one Xlet function key has been set to execute the Xlet.

10. The method as claimed in claim 7 or 9, wherein performing the operation corresponding to the input signal comprises displaying the executed Xlet if a visual change of the Xlet is generated.

11. The method as claimed in claim 7, 9 or 10, wherein performing the operation corresponding to the input signal comprises displaying a message indicating that the Xlet is being executed if a visual change of the Xlet is not generated.

12. The method as claimed in claim 10, the method further comprising:
calling a function for use when a display on a screen is changed,
wherein performing the operation corresponding to the input signal comprises determining that the visual change of the Xlet is generated, in response to a call for the function for use when the display is changed.

## Patentansprüche

1. Bildanzeigevorrichtung (100), die dazu angeordnet ist, Anweisungen von einer Fernbedienung (300) zu empfangen, wobei die Bildanzeigevorrichtung (100) Folgendes umfasst:
eine Xlet-Einheit (130), die dazu angeordnet ist, eine in einem Datensendesignal enthaltene Xlet auszuführen;
eine Anzeigeeinheit (150), die dazu angeordnet ist, einen Status einer Vielzahl von Xlet-Funktionstasten der Fernbedienung (300) anzugeben, denen die Xlet betreffende Funktionen zugewiesen sind; und
eine Steuereinheit (160), die dazu angeordnet ist, die Xlet-Einheit (130) dazu zu steuern, einen Vorgang auszuführen, der einem von der Fernbedienung (300) her empfangenen Eingangssignal entspricht, wenn das Eingangssignal der Betätigung einer der Xlet-Funktionstasten entspricht,
wobei die Steuereinheit (160) weiter dazu angeordnet ist, die Anzeigeeinheit (150) dazu zu steuern, eine Meldung anzuzeigen, die angibt, dass die Xlet ausgeführt wird, wenn das Eingangssignal der Auswahl einer der Xlet-Funktionstasten entspricht, die nicht zum Ausführen der Xlet eingestellt wurde.

2. Bildanzeigevorrichtung (100) nach Anspruch 1, wobei die Anzeigeeinheit (150) dazu angeordnet ist, eine die Vielzahl von Xlet-Funktionstasten ausschließende Vielzahl von Funktionstasten der Fernbedienung (300) anzuzeigen.

3. Bildanzeigevorrichtung (100) nach Anspruch 1, wobei die Steuereinheit (160) dazu angeordnet ist, die Anzeigeeinheit (150) dazu zu steuern, die von der Xlet-Einheit (130) ausgeführte Xlet anzuzeigen, wenn das Eingangssignal der Betätigung einer der Xlet-Funktionstasten entspricht, wobei die eine Xlet-Funktionstaste eine zugewiesene Funktion des Ausführens der Xlet aufweist.

4. Bildanzeigevorrichtung (100) nach Anspruch 1 oder 3, wobei die Steuereinheit (160) dazu angeordnet ist, die Anzeigeeinheit (150) dazu zu steuern, die Xlet anzuzeigen, die von der Xlet-Einheit (130) ausgeführt wird, wenn eine visuelle Änderung der Xlet von der Xlet-Einheit (130) erzeugt wird.

5. Bildanzeigevorrichtung (100) nach Anspruch 1, 3 oder 4, wobei die Steuereinheit (160) dazu angeordnet ist, die Anzeigeeinheit (150) dazu zu steuern, eine Meldung anzuzeigen, die einem Benutzer mitteilt, dass Xlet ausgeführt wird, wenn keine visuelle Änderung der Xlet von der Xlet-Einheit (130) erzeugt wird.

6. Bildanzeigevorrichtung (100) nach Anspruch 4, die weiter Folgendes umfasst:
eine Bildschirmverwaltungseinheit (140), die eine Anzeige auf einem Bildschirm als Reaktion auf eine Anforderung von der Xlet-Einheit (130) ändert,
wobei die Steuereinheit (160) dazu angeordnet ist, je nachdem, ob die Bildschirmverwaltungseinheit (140) eine Funktion zur Verwendung aufruft, wenn eine Anzeige auf dem Bildschirm geändert wird, zu bestimmen, ob eine visuelle Änderung der Xlet erzeugt wird.

7. Verfahren zum Bereitstellen einer Xlet einer Bilderzeugungsvorrichtung (100), die dazu angeordnet ist, Anweisungen von einer Fernbedienung (300) zu empfangen, wobei das Verfahren Folgendes umfasst:
Ausführen einer in einem Datensendesignal enthaltenen Xlet;
Angeben eines Status einer Vielzahl von Xlet-Funktionstasten der Fernbedienung (300), denen die Xlet betreffende Funktionen zugewiesen wurden; und
Ausführen eines Vorgangs, der einem von der Fernbedienung (300) her empfangenen Eingangssignal entspricht, wenn das Eingangssignal der Betätigung einer der Xlet-Funktionstasten entspricht,
wobei das Ausführen des dem Eingangssignal entsprechenden Vorgangs das Anzeigen einer Meldung umfasst, die angibt, dass die Xlet ausgeführt wird, wenn das Eingangssignal der Auswahl einer der Xlet-Funktionstasten, die nicht zum Ausführen der Xlet eingestellt wurde, entspricht.

8. Verfahren nach Anspruch 7, wobei der Status der Vielzahl von Xlet-Funktionstasten angegeben wird, indem nur eine Vielzahl von Funktionstasten der Fernbedienung (300) angezeigt wird, denen keine die Xlet betreffenden Funktionen zugewiesen sind.

9. Verfahren nach Anspruch 7, wobei das Ausführen des dem Eingangssignal entsprechenden Vorgangs das Anzeigen der ausgeführten Xlet umfasst, wenn das Eingangssignal der Auswahl einer der Xlet-Funktionstasten entspricht, wobei die eine Xlet-Funktionstaste dazu eingestellt wurde, die Xlet auszuführen.

10. Verfahren nach Anspruch 7 oder 9, wobei das Ausführen des dem Eingangssignal entsprechenden Vorgangs das Anzeigen der ausgeführten Xlet umfasst, wenn eine visuelle Änderung der Xlet erzeugt wird.

11. Verfahren nach Anspruch 7, 9 oder 10, wobei das Ausführen des dem Eingangssignal entsprechenden Vorgangs das Anzeigen einer Meldung umfasst, die angibt, dass die Xlet ausgeführt wird, wenn keine visuelle Änderung der Xlet erzeugt wird.

12. Verfahren nach Anspruch 10, wobei das Verfahren weiter Folgendes umfasst:
Aufrufen einer Funktion zur Verwendung, wenn eine Anzeige auf einem Bildschirm geändert wird,
wobei das Ausführen des dem Eingangssignal entsprechenden Vorgangs als Reaktion auf einen Aufruf der Funktion zur Verwendung, wenn die Anzeige geändert wird, das Bestimmen, dass die visuelle Änderung der Xlet erzeugt wird, umfasst.

## Revendications

1. Appareil d'affichage d'image (100) agencé pour recevoir des instructions depuis un contrôleur distant (300), l'appareil d'affichage d'image (100) comprenant :
une unité Xlet (130) agencée pour exécuter une Xlet incluse dans un signal de diffusion de données ;
une unité d'affichage (150) agencée pour indiquer un état d'une pluralité de touches de fonction Xlet du contrôleur distant (300), auxquelles des fonctions relatives à la Xlet sont assignées; et
une unité de commande (160) agencée pour commander l'unité Xlet (130) afin d'exécuter une opération correspondant à un signal d'entrée reçu depuis le contrôleur distant (300), si le signal d'entrée correspond à l'activation de l'une des touches de fonction Xlet;
dans lequel l'unité de commande (160) est agencée en outre pour commander l'unité d'affichage (150) afin d'afficher un message indiquant que la Xlet est en cours d'exécution si le signal d'entrée correspond à la sélection de l'une des touches de fonction Xlet, laquelle n'a pas été configurée pour exécuter la Xlet.

2. Appareil d'affichage d'image (100) selon la revendication 1, dans lequel l'unité d'affichage (150) est agencée pour afficher une pluralité de touches de fonction du contrôleur distant (300) excluant la pluralité de touches de fonction Xlet.

3. Appareil d'affichage d'image (100) selon la revendication 1, dans lequel l'unité de commande (160) est agencée pour commander l'unité d'affichage (150) afin d'afficher la Xlet exécutée par l'unité Xlet (130), si le signal d'entrée correspond à l'activation de l'une des touches de fonction Xlet, dans lequel ladite une touche de fonction Xlet a une fonction d'exécution de Xlet assignée.

4. Appareil d'affichage d'image (100) selon l'une quelconque des revendications 1 ou 3, dans lequel l'unité de commande (160) est agencée pour commander l'unité d'affichage (150) afin d'afficher la Xlet en cours d'exécution par l'unité Xlet (130) si un changement visuel de la Xlet est généré par l'unité Xlet (130).

5. Appareil d'affichage d'image (100) selon l'une quelconque des revendications 1, 3 ou 4, dans lequel l'unité de commande (160) est agencée pour commander l'unité d'affichage (150) afin d'afficher un message informant un utilisateur que la Xlet est en cours d'exécution si un changement visuel de la Xlet n'est pas généré par l'unité Xlet (130).

6. Appareil d'affichage d'image (100) selon la revendication 4, comprenant en outre :
une unité de gestion d'écran (140) qui change un affichage sur un écran en réponse à une demande émise par l'unité Xlet (130),
dans lequel l'unité de commande (160) est agencée pour déterminer qu'un changement visuel de la Xlet est généré ou non selon que l'unité de gestion d'écran (140) appelle ou non une fonction à utiliser quand un affichage sur l'écran est changé.

7. Procédé de fourniture d'une Xlet d'un appareil d'affichage d'image (100) agencé pour recevoir des instructions depuis un contrôleur distant (300), le procédé comprenant :
l'exécution d'une Xlet incluse dans un signal de diffusion de données ;
l'indication d'un état d'une pluralité de touches de fonction Xlet du contrôleur distant (300), auxquelles des fonctions relatives à la Xlet ont été assignées ; et
l'exécution d'une opération correspondant à un signal d'entrée reçu depuis le contrôleur distant (300), si le signal d'entrée correspond à l'activation de l'une des touches de fonction Xlet ;
dans lequel l'exécution de l'opération correspondant au signal d'entrée comprend l'affichage d'un message indiquant que la Xlet est en cours d'exécuion si le signal d'entrée correspond à la sélection de l'une des touches de fonction Xlet, laquelle n'a pas été configurée pour exécuter la Xlet.

8. Procédé selon la revendication 7, dans lequel l'état de la pluralité de touches de fonction Xlet est indiqué en affichant uniquement une pluralité de touches de fonction du contrôleur distant (300) auxquelles ne sont pas assignées des fonctions relatives à la Xlet.

9. Procédé selon la revendication 7, dans lequel l'exécution de l'opération correspondant au signal d'entrée comprend l'affichage de la Xlet exécutée si le signal d'entrée correspond à la sélection de l'une des touches de fonction Xlet, dans lequel ladite une touche de fonction Xlet a été configurée pour exécuter la Xlet.

10. Procédé selon l'une quelconque des revendications 7 ou 9, dans lequel l'exécution de l'opération correspondant au signal d'entrée comprend l'affichage de la Xlet exécutée si un changement visuel de la Xlet est généré.

11. Procédé selon l'une quelconque des revendications 7, 9 ou 10, dans lequel l'exécution de l'opération correspondant au signal d'entrée comprend l'affichage d'un message indiquant que la Xlet est en cours d'exécution si un changement visuel de la Xlet n'est pas généré.

12. Procédé selon la revendication 10, le procédé comprenant en outre :
l'appel d'une fonction à utiliser quand un affichage sur un écran est changé,
dans lequel l'exécution de l'opération correspondant au signal d'entrée comprend la détermination que le changement visuel de la Xlet est généré, en réponse à un appel de la fonction à utiliser quand l'affichage est changé.
